# EUROPEAN PATENT APPLICATION

(11) **EP 4 592 248 A1**
(43) Date of publication of application: **30.07.2025**
(21) Application number: 22959652.3
(22) Date of filing: 13.12.2022
(51) Int. Cl.: C01G 43/06

(54) **METHOD FOR PRODUCING URANIUM TETRAFLUORIDE**

(30) Priority: 23.09.2022 KZ 20220574
(71) Applicant: Joint Stock Company "National Atomic Company Kazatomprom", Astana, 010000 (KZ)
(72) Inventor: OMIRGALI, Armanbek Kasymuly, Astana, 010000 (KZ); BURKURMANOV, Berik Belgebaevich, Astana, 010000 (KZ); DUISEBAEV, Baurzhan Orazovich, Almaty, 050013 (KZ); BEREZOVSKY, Andrey Vladimirovich, Almaty, A35H7Y7 (KZ); DULENIN, Alexey Petrovich, Moscow, 127486 (RU); SAIDULLAYEVA, Sabina Abdikarimovna, Almaty, A05C2X4 (KZ); TASHUTA, Galina Nikolaevna, Almaty, A05B0K9 (KZ); KOPBAEVA, Maria Petrovna, Almaty, 050012 (KZ)
(74) Representative: Osmans, Voldemars
(86) International application number: PCT/KZ2022/000022
(87) International publication number: WO 2024/063632

(57) **Abstract**

The invention relates to chemistry and metallurgy. A method for producing uranium tetrafluoride includes obtaining a solution of tetravalent uranium, precipitating uranium-containing raw material from said solution to produce a sludge, filtering said sludge, washing the residue, and drying and calcining same. The solution of tetravalent uranium is obtained using, as a starting material, a solution of a uranium-rich eluate formed as a result of the sorption concentration of uranium from pregnant solutions during the in-situ leaching of uranium, said solution is pre-acidified with sulphuric acid to a concentration of 200-250 g/dm³, and the acidified solution is passed through a layer of zinc, or uranium is electrochemically reduced using a uranium-rich eluate pre-acidified with sulphuric acid to a concentration of 40-45 g/dm3. The uranium-containing raw material is precipitated in the form of ammonium uranium pentafluoride by the introduction of ammonium bifluoride in three stages every 15 minutes at 90-100°C under vigorous stirring, and washing is carried out using process water at a liquid to solid ratio of 3:1. Drying is carried out at 210-250°C for one hour, and calcining is carried out at 600-650°C for one hour. The invention makes it possible to precipitate crystalline hydrates of ammonium uranium pentafluoride directly from solutions of uranium-rich eluates, thus reducing consumption of chemical reagents and electrical energy.

## Description

### FIELD OF INVENTION

The invention relates to chemistry and metallurgy, specifically to the technology of obtaining uranium tetrafluoride from commercial desorbates obtained as a result of sorption concentration of uranium from productive solution. Uranium tetrafluoride obtained by the proposed method can be used in the production of uranium hexafluoride or metallic uranium.

### BACKGROUND

A method for producing uranium tetrafluoride is known, which includes mixing uranium dioxide with ammonium bifluoride and carbamide, heat treating the resulting mixture at a temperature above the boiling point of carbamide, but below the boiling point of ammonium bifluoride, followed by holding at this temperature until a double salt is formed, and then heat treating at a temperature of 500-600°C with holding at this temperature in a vacuum or in an inert atmosphere until uranium tetrafluoride is obtained. (Patent 2601477 Russian Federation, IPC C01G 43/06 (2006.01), published 11/10/2016, Bulletin No. 31).

The main disadvantage of this method is the use of uranium dioxide as the feedstock, the production of which is accompanied by a large number of technological processes. Uranium dioxide is obtained by reducing uranium trioxide or uranium oxide. Uranium oxide or uranium trioxide is obtained by calcining ammonium, sodium polyuranates, and uranium peroxide, which are obtained by precipitating uranium from commercial desorbates.

The closest to the claimed invention is a method for producing uranium tetrafluoride, including dissolving uranium dioxide, precipitating uranium tetrafluoride from the resulting solution by feeding hydrofluoric acid, filtering the pulp, washing the precipitate, drying and calcining. (Patent 2396212 Russian Federation, IPC C01G 43/06 (2006.01), C22B 60/02 (2006.01), C22B 3/04 (2006.01), published 10.08.2010, Bulletin No. 22).

The disadvantage of the known method is the need to dissolve uranium dioxide in hydrochloric acid, which necessitates the use of corrosion-resistant equipment, as well as the use of uranium dioxide as the feedstock, the production of which requires a large number of technological stages.

### DETAILED DESCRIPTION

Commercial desorbate is a chemical concentrate of natural uranium - uranium oxide - uranium dioxide.

The objective of the invention is to develop a method for obtaining uranium tetrafluoride from solutions of commercial desorbates formed after sorption concentration of uranium from a productive solution, and to reduce the costs of chemical reagents and electricity spent on obtaining uranium dioxide.

The technical result of the claimed invention is the implementation of direct precipitation of ammonium uranium pentafluoride crystal hydrates of the composition: NH₄UF₅xH₂O and NH₄UF₅x0.5H₂O from solutions of commercial desorbates using ammonium bifluoride as a precipitating reagent, followed by calcination of the precipitate to uranium tetrafluoride.

The technical result is achieved by a method for obtaining uranium tetrafluoride, including obtaining a solution of tetravalent uranium, precipitating uranium-containing raw materials from the solution, obtaining a pulp and subsequently filtering it, washing the precipitate, drying and calcining. According to the invention, a solution of tetravalent uranium is obtained by using as a feedstock a solution of commercial desorbate formed as a result of sorption concentration of uranium from productive solutions of underground borehole leaching of uranium, pre-acidifying it with sulfuric acid to a concentration of 200-250 g/dm³, passing the acidified solution through a layer of zinc, or reducing uranium by an electrochemical method using commercial desorbate pre-acidified with sulfuric acid to a concentration of 40-45 g/dm³, precipitating uranium-containing raw material in the form of ammonium pentafluoride uranium from the solution by feeding ammonium bifluoride into the reduced uranium-containing solution in three stages every 15 minutes at a temperature of 90-100°C with vigorous stirring, washing with industrial water at L:S = 3: 1, drying is carried out at a temperature of 210-250°C for 1 hour, calcination carried out at a temperature of 600-650°C for 1 hour.

### EXAMPLES

**Example 1.** Uranium tetrafluoride is obtained from commercial desorbates obtained as a result of sorption concentration of uranium from productive solutions. The uranium content in the desorbates is 40-100 g/dm³. Before the process of precipitation of ammonium uranium pentafluoride, a preliminary reduction of hexavalent uranium to tetravalent is carried out. To carry out the process of uranium reduction, the solution of commercial desorbate is preliminarily acidified with sulfuric acid to a concentration of 200 g/dm³. Through a vertically located column filled with zinc, an acidified solution of commercial desorbate is passed from the bottom to the top at a ratio of Vₛₒₗᵤₜᵢₒₙ/V_{zinc} = 1/12. The degree of uranium reduction in this case is 99%. Then, from the obtained solutions, precipitation of ammonium uranium pentafluoride crystal hydrates is carried out with ammonium bifluoride. Precipitation is carried out at a temperature of 90°C with vigorous stirring. The required consumption of the precipitating reagent to ensure complete precipitation is 0.62 kg NH₄HF₂/ kg U. To obtain precipitates with good filtration characteristics, the required amount of reagent is added in three stages. The degree of uranium extraction into the precipitate is 99%. The resulting precipitate is filtered from the mother liquor, washed with industrial water at L:S = 3:1 and sent to the drying and calcination process. Drying and calcination of uranium ammonium pentafluoride to uranium tetrafluoride is carried out in a furnace with a reducing atmosphere to prevent uranium oxidation processes. The drying and calcination process is carried out in two stages:
- drying at 210°C for 1 hour;
- calcination at 600°C for 1 hour.

**Example 2.** Uranium tetrafluoride is obtained from commercial desorbates obtained by sorption concentration of uranium from productive solutions. The uranium content in desorbates is 40-100 g/dm³. Before the precipitation of ammonium uranium pentafluoride, preliminary reduction of hexavalent uranium to tetravalent is carried out using an electrochemical method. To carry out the uranium reduction process, the commercial desorbate solution is preliminarily acidified with sulfuric acid to a concentration of 40-50 g/dm³. Uranium is reduced in a diaphragm electrolyzer with a separated cathode and anode space at a current of 5 A. The commercial desorbate solution is passed through the cathode chamber of the electrolyzer with a given throughput, and solutions of uranium sorption mother liquors, additionally fortified with sulfuric acid to a concentration of 15-30 g/dm³, are passed through the anode chamber. The electrochemical recovery of uranium is carried out in the recycle mode for 160-180 minutes. Then, the obtained solutions are used to precipitate ammonium uranium pentafluoride crystal hydrates with ammonium bifluoride. Precipitation is carried out at a temperature of 90°C with vigorous stirring. The required consumption of the precipitating reagent to ensure complete precipitation is 0.62 kg NH₄HF₂ / kg U. To obtain precipitates with good filtration characteristics, the required amount of reagent is added in three stages. The degree of uranium extraction into the precipitate is 99%. The resulting precipitate is filtered from the mother liquor, washed with industrial water at L:S = 3:1 and sent to the drying and calcination process. Drying and calcination of ammonium uranium pentafluoride to uranium tetrafluoride is carried out in a furnace with a reducing atmosphere to prevent uranium oxidation processes. The drying and calcination process is carried out in two stages:
- drying at 210°C for 1 hour;
- calcination at 600°C for 1 hour.

Comparative **Table 1** lists the elements and compounds that constitute uranium tetrafluoride, which is obtained through direct precipitation from commercial desorbates.

**Table 1. Content of uranium and impurity components in uranium tetrafluoride**

| Elements or compounds | USA | Canada | India | TFU (direct precipitation from commercial desorbates) |
|---|---|---|---|---|
| UF₄ | 96,2 | - | - | 96,6 |
| U | 76.0 | - | 74,28 | 77,06 |
| Fe | 5,5 _{*} 10⁻³ | 1 _{*} 10⁻² | 1,46 _{*} 10⁻² | 1,2 _{*} 10⁻¹ |
| Ni | 3,5 _{*} 10⁻³ | 1 _{*} 10⁻² | 1 _{*} 10⁻⁴ | 1 _{*} 10⁻⁵ |
| Cr | 0,9 _{*} 10⁻³ | 1,5 _{*} 10⁻³ | 5 _{*} 10⁻⁴ | 3,3 _{*} 10⁻³ |
| Mn | 1 _{*} 10⁻⁴ | 5 _{*} 10⁻⁴ | 2 _{*} 10⁻⁴ | 4 _{*} 10⁻³ |
| Mo | 1 _{*} 10⁻³ | - | - | 7 _{*} 10⁻³ |
| Cu | - | 2 _{*} 10⁻³ | 5 _{*} 10⁻⁴ | 1,2 _{*} 10⁻³ |
| ∑ Rare earths | 1,5 _{*} 10⁻⁵ | 2 _{*} 10⁻⁵ | 2,6 _{*} 10⁻⁵ | 1,5 _{*} 10⁻⁴ |

As evidenced by the results in **Table 1,** the chemical composition of uranium tetrafluoride meets the required standards for U and UF₄ content.

## Claims

1. A method for producing uranium tetrafluoride comprising producing a solution of tetravalent uranium, precipitating uranium-containing raw material from the solution to obtain a pulp and then filtering it, washing the precipitate, drying and calcining, **characterized in that** the solution of tetravalent uranium is obtained by using as the feedstock a solution of commercial desorbate formed as a result of sorption concentration of uranium from productive solutions of underground borehole leaching of uranium, pre-acidifying it with sulfuric acid to a concentration of 200-250 g/dm³, passing the acidified solution through a layer of zinc, or reducing uranium by an electrochemical method using commercial desorbate pre-acidified with sulfuric acid to a concentration of 40-45 g/dm³, precipitating uranium-containing raw material in the form of ammonium uranium pentafluoride from the solution by feeding ammonium bifluoride into the reduced uranium-containing solution in three stages every 15 minutes at 90-100°C with intensive stirring, washing with industrial water at L:T=3:1, drying at 210-250°C for 1 hour, calcinating at 600-650°C for 1 hour.
